# EUROPEAN PATENT APPLICATION

(11) **EP 4 438 163 A1**
(43) Date of publication of application: **02.10.2024**
(21) Application number: 23382285.7
(22) Date of filing: 27.03.2023
(51) Int. Cl.: B01D 67/00, B01D 71/06, H01M 50/414

(54) **INFILTRATED POROUS POLYMER BLEND MEMBRANE**

(71) Applicant: Consejo Superior De Investigaciones Científicas, 28006 Madrid (ES)
(72) Inventor: García García, Nuria, Madrid (ES); Gregorio Martínez, Víctor, Madrid (ES); Tiemblo Magro, Pilar, Madrid (ES); Martínez Gómez, Aránzazu, Madrid (ES)
(74) Representative: Pons

(57) **Abstract**

The invention relates to an infiltrated porous polymer blend membrane which comprises an infiltrated liquid, a first polymer which forms a gel with the infiltrated liquid, and a second polymer which is insoluble and non-swellable in the infiltrated liquid. The invention also relates to the process to obtain said membrane and to its use as a component of sensors, actuators, molecular transporters, biomedical devices, capacitors, and batteries.

## Description

The invention relates to an infiltrated porous polymer blend membrane which comprises an infiltrated liquid, a first polymer which forms a gel with the infiltrated liquid, and a second polymer which is insoluble and non-swellable in the infiltrated liquid. The invention also relates to the process to obtain said membrane and to its use as a component of sensors, actuators, molecular transporters, biomedical devices, capacitors, and batteries.

### BACKGROUND ART

Polymer Membrane technology is a very mature topic, in which an enormous amount of work has been done. Inversion phase or coagulation methods, the best known of which is NIPS (non-solvent induced phase separation) have been used for decades to prepare polymer separation membranes (battery separators, filtration, dialysis, osmosis, or gas separation membranes, etc.). By selecting appropriately, the polymer employed, and the conditions used to prepare the membrane (concentration, solvent, non-solvent, temperature) it is possible to prepare an immense variety of pore sizes, pore morphologies and surface chemistries. Each of these features will govern the validity of a given membrane for a given separation/transport process and liquid phase.

It has been described in the art a microporous polymer electrolyte membrane based on blends of poly (vinylidene fluoride-co-hexafluoropropylene) {P(VdF-HFP)} and polyethylene oxide (PEO) prepared by phase inversion technique taking acetone as solvent and ethanol as non-solvent because they are miscible. It was observed that when PEO concentration was varied, good microporous structure of the membranes was obtained at 40 wt.% of PEO leading to maximum ionic conductivity what makes it useful for rechargeable lithium batteries (see "ionic transport in P(VdF-HFP)-PEO based novel microporous polymer electrolytes" Kumar, A. et al. Bull. Mater. Sci. 2009, 32(6), 627-632). The described membrane has the problem that PVDF-HFP is swollen by many electrolytes, for instance many Li electrolytes, and hence its mechanical and dimensional stability in long periods of time will change. The described membrane has the problem that the distribution of PEO in the membrane is not controlled and characterized, and it may be distributed homogeneously and not preferentially at the pore surface. Since PEO is soluble in many electrolytes this will further endanger the mechanical and dimensional stability of the infiltrated membrane. The described membrane has the problem that molecular weight (MW) of PEO may not be sufficiently high as to mitigate sufficiently the PEO migration once the membrane is infiltrated, what will endanger the long-term properties of the membrane.

Therefore, it would be desirable to obtain porous membranes with an adequate choice of soluble/insoluble polymers, polymer distribution and pore morphology to allow large amounts of infiltrated liquid, and preservation of the dimensional stability and the mechanical properties of the infiltrated membrane, both properties being stable for long periods of time, to improve their applicability in the manufacture of, for example, sensors, actuators, gas transporters, biomedical devices and batteries.

### SUMMARY OF THE INVENTION

A first aspect of the present invention relates to an infiltrated porous polymer blend membrane, which comprises:
- a polymer gel which is formed by an infiltrated liquid and a first polymer which is soluble in the infiltrated liquid, and which is of a molecular weight from 5×10⁵ to 8×10⁶ g/mol, preferably of a molecular weight from 1×10⁶ g/mol to 8×10⁶ g/mol; and
- a second polymer which is a structural polymer, which is insoluble in the infiltrated liquid, and which is non swellable in the infiltrated liquid.

The polymer gel as defined above, is formed *in situ* at the membrane pores.

The infiltrated porous polymer blend membrane of the invention shows liquid-like transport properties (ion or molecular), together with dimensional and mechanical stability, and no liquid leaks at the use temperature of the membrane.

The "infiltrated liquid" include, among others, water; physiological media; lubricants such as silicon oil, fluorinated silicon oil or fluoroethers, such as krytox; ionic liquids including hydrophobic room temperature ionic liquids such as pyrrolidinium bis(fluorosulfonyl)imide (FSI) or bis[(trifluoromethyl)sulfonyl]imide (TFSI) or imidazolium TFSI or FSI, Deep Eutectic Solvents (DES) including natural deep eutectic solvents (NADES) such as blends of choline chloride, glycerol, xylitol, menthol, sorbitol, thymol, citric acid, lactic acid, proline, or fatty acids,; organic solvents; dissolutions of organic or inorganic compounds; liquid electrolytes, Li, Zn, Na, Al, Mg or other metal salts dissolved in water, or dissolved in organic solvents such as ethylene glycol, glymes, cyclic carbonates, DMSO, etc., or dissolved in ionic liquids, for example Al, Zn, Na or Li salts dissolved at room temperature ionic liquids such as pyrrolidinium or imidazolium ones; DES electrolytes including metal salts (such as Zn, Al, Mg, Li, or others), as for example the eutectic mixture ZnCl₂ dissolved in ethylene glycol at a molar ratio 1:4 (EGZn).

The first polymer is preferably located at the pore walls and the membrane surface and forms the gel with the infiltrated liquid. The first polymer is further an ultra-high molecular weight (UHMW) polymer of a molecular weight from 5×10⁵ to 8×10⁶ g/mol, preferably of a molecular weight from 1 ×10⁶ g/mol to 8× 10⁶g/mol. Examples include, among others, polyethylene oxide) (PEO), poly (vinyl pyrrolidone) (PVP), polyacrylamide (PAA), polydimethylsiloxane (PDMS) or poly(meth)acrylates.

The first polymer of the invention should be of the above indicated high molecular weight to form the polymer gel at the pores of the membranes because the higher molecular weight of the polymer, the lower the polymer concentration needed to form a gel, and the lower the polymer concentration, the higher the preservation of the molecular or ionic transport properties of the liquid infiltrated. Further, the use of a first polymer of the above indicated high molecular weight strongly decreases the polymer migration rate, making the polymer blend porous membrane of the invention more stable along the time. Accordingly, the membranes of the invention are solid and with no liquid leaks, where the transport properties are highly preserved.

Accordingly, in another embodiment the invention relates to the infiltrated porous polymer blend membrane as defined above, wherein the first polymer is selected from polyethylene oxide) (PEO), polyacrylamide (PAA), polydimethylsiloxane (PDMS), polyacrylates, polymethacrylates or poly (vinyl pyrrolidone) (PVP), and preferably wherein the first polymer is poly(ethylene oxide) (PEO) or poly (vinyl pyrrolidone) (PVP), and more preferably wherein the first polymer is polyethylene oxide) (PEO).

In another embodiment the invention relates to the infiltrated porous polymer blend membrane as defined above, wherein the first polymer is located at the pore walls and the membrane surface.

The "second polymer" is the membrane scaffold and it endures long contact with the infiltrated liquid, providing long-term structural stability to the ensemble. The "second polymer" is the structural polymer (SP) of the membrane of the invention. It is the mechanical scaffold or the skeleton of the porous membrane and is not altered physically or chemically by the presence of the infiltrated liquid. Polymers chosen as second polymer have Tg and/or Tm over the use temperature of the membrane and are chemically inert, insoluble, and non-swellable in the infiltrated liquid. It can be any polymer able to form membranes and able to endure the contact with the infiltrated liquid without dissolution, swelling or deterioration and which is solid at the use temperature of the membrane. Examples include, among others, polyolefins, polyurethanes, polyethers, polyamides, polyimides, polysulfones, poly ether sulfones, poly ether imides, cellulose based polymers, polyesters including biopolyesters such as polylactic acid (PLA), polyhydroxyalkanoates (PHA) and polycarbonates. Preferably, the second polymer is selected from polyether sulfone (PES) (which particularly presents a good resistance for alkali liquids) and polybisphenol A carbonate (PC) (which particularly presents a good resistance for acid liquids), and polylactic acid (PLA).

Accordingly, in another embodiment the invention relates to the infiltrated porous polymer blend membrane as defined above, wherein the second polymer is selected from polyether sulfone (PES), polybisphenol A carbonate (PC) and polylactic acid.

Micro or nanometric inorganic or organic fillers or particles, can be added to the formulation, as is done in common polymer composite technology, to provide properties such as improved mechanical or heat resistance, antioxidation, color, or other properties. Example of particles include, among others, cellulose, modified cellulose, silica, laminar or fibrous silicates, titania, starch, zeolites, oxides, ceramic particles, and D-α-Tocopherol polyethylene glycol 1000 succinate.

Accordingly, in another embodiment the invention relates to the infiltrated porous polymer blend membrane as defined above, which further comprises micro inorganic fillers, nanometric inorganic fillers, micro-organic fillers or nanometric organic fillers.

The wt. % ratio of the first polymer and the second polymer pair depends on their nature, and typically goes from 1/99 to 40/60. For the particular case wherein the first polymer is PEO, and the second polymer is PC, the PEO/PC pair it is from 1/99 to 40/60. For the particular case wherein the first polymer is PEO, and the second polymer is PES, the PEO/PES pair is from 1/99 to 40/60.

Accordingly, in another embodiment the invention relates to the infiltrated polymer blend membrane as defined above, wherein the wt. % ratio of the first polymer/the second polymer is from 1/99 to 40/60.

In another embodiment the invention relates to the infiltrated polymer blend membrane as defined above, wherein:
the first polymer is PEO;
the second polymer is PC; and
the wt. % ratio of PEO/PC is from 1/99 to 40/60, and preferably from 5/95 to 20/80.

In another embodiment the invention relates to the infiltrated polymer blend membrane as defined above, wherein:
the first polymer is PEO;
the second polymer is PES; and
the wt. % ratio of PEO/PES is from1/99 to 40/60, and preferably from 5/95 to 30/70.

In another embodiment, the invention relates to the infiltrated porous polymer blend membrane as defined above, wherein the thickness of the membrane is from 5 µm to 500 µm, preferably the thickness of the membrane is from 5 µm to 40 µm.

The membranes of the invention can be prepared by the non-solvent induced phase separation approach (NIPS) combining two polymers.

In NIPS, the chosen set of experimental conditions leads to specific pore morphologies. In these polymer blend porous membranes; the experimental conditions rule the pore morphology and the distribution in the membrane of the first and the second polymer. The NIPS experimental parameters must be adapted to each polymer blend to obtain an adequate pore morphology and an adequate polymer distribution for each application, with the first polymer available at the pore surface. The invention describes porous polymer membranes for *in-situ* polymer gel formation with an infiltrated liquid.

Thus, another aspect of the invention relates to a process to obtain the infiltrated porous polymer blend membrane as defined above, which comprises the steps of:
i) dissolution of the second polymer, preferably wherein the second polymer is polyether sulfone (PES), polybisphenol A carbonate (PC), in one or more solvents, stirring at a temperature from 20 ºC to 70 ºC, preferably at a temperature of 25 ºC, during a time from 1 h to 24 h,
ii) dissolution of the first polymer in the dissolution of the second polymer obtained in step (i), stirring at a temperature from 25 ºC to 140 ºC, during a time from 5 minutes to 120 minutes,
iii) spreading of the dissolution obtained in step (ii) on a surface by bar-coating to obtain a coated blend dissolution;
iv) immersion of the coated blend dissolution of step (iii) in a non-solvent of the first polymer and the second polymer, preferably wherein the non-solvent is ethanol, to induce the phase separation and obtain the porous polymer blend membrane; and
v) infiltration of the infiltrated liquid, preferably wherein the infiltration is performed by soaking or injecting, to obtain *in situ* the polymer gel.

Steps (i) to (iv) of the above procedure constitute the adapted NIPS procedure to obtain the porous polymer blend membrane of the invention which, by the subsequent step (v), is infiltrated with a liquid to obtain the infiltrated porous polymer blend membrane with *in situ* polymer gel formation of the invention as defined above.

In another embodiment the invention relates to the process to obtain the infiltrated porous membrane as defined above, wherein the solvent of step (i) is selected from dimethylformamide (DMF), n-methyl pyrrolidone (NMP), a green solvent or a mixture thereof.

In another embodiment the invention relates to the process to obtain the infiltrated porous membrane as defined above, wherein the solvent of step (i) is dimethylformamide (DMF), n-methyl pyrrolidone (NMP) or a mixture thereof.

Step (i) is performed at a temperature from 20 ºC to 70 ºC, and it may be completed in a time of less than 24 h. If an organic solvent such as DMF and/or NMP is used, the temperature of that step is of room temperature, that is, by no heating the mixture. If a green solvent is used, the temperature may be raised until 70 ºC.

In another embodiment the invention relates to the process to obtain the infiltrated porous membrane as defined above, wherein the green solvent is selected from γ-valerolactone; dihydrolevoglucosenone, and methyl-5-(dimethylamino)-2-methyl-5-oxopentanoate).

The solvents of step (i) may be one solvent or a mixture thereof of the list of solvents defined above.

Though these polymer blend porous membranes can be applied in many different fields, such as sensors and actuators, molecular and ionic transport, slippery surfaces or biomedical applications, this invention focuses on the infiltration of liquid electrolytes containing metal salts to produce stiff solid polymer membranes for varied capacitors and battery technologies, among which Li, Na, Zn and Al based secondary batteries.

Accordingly, another aspect of the invention relates to the use of the infiltrated porous polymer blend membrane as defined above, as a component of sensors, actuators, molecular transporters, biomedical devices, capacitors, and batteries, and preferably wherein the batteries are a Li, Na, Zn or Al based electrochemical batteries. Another aspect of the invention relates to a component of sensors, actuators, molecular transporters, biomedical devices, capacitors, and batteries, and preferably wherein the batteries are a Li, Na, Zn or Al based electrochemical batteries, which comprises the infiltrated porous polymer blend membrane as defined above.

Another aspect of the invention relates to sensors, actuators, molecular transporters, biomedical devices, capacitors, and batteries, and preferably wherein the batteries are a Li, Na, Zn or Al based electrochemical batteries, which comprises the infiltrated porous polymer blend membrane as defined above.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

**Fig. 1****.** Shows SEM images of PES/PEO membranes (a) with PEO Mw 1×10⁵ g/mol, 2×10⁶g/mol and 8×10⁶ g/mol using DMF and (b) PES75 using NMP instead of DMF as solvent.
**Fig. 2****.** Shows FTIR spectra of (a) the membrane PES75, described in Table 1 prepared in NMP as detailed in Table 1, at three different points compared to the spectrum of pure PES, and (b) comparison of the PES75 experimental spectrum with the additive spectrum of PES+0.8 PEO. The addition spectrum has been done at a PES:PEO ratio of 1:0.8, which is their approximate molar composition.
**Fig. 3****.** Shows PES80, described in Table 1, membrane (a) before soaking in EGZn and (b) after one year soaking. Both are placed on a graph paper to show how dimensions have not been altered.
**Fig. 4****.** Shows the heat resistance of the membrane PES75 in comparison with a PP commercial battery separator, Celgard 2500, after heating at 175 ºC for 10 min.
**Fig. 5****.** Shows the uptake of EGZn for the membranes PC9540, PC9240, PC9090, PC8590 and PC80120 as a function of time.
**Fig. 6****.** Shows the heat shrinkage of the membrane PC90-90 in comparison with a PP commercial battery separator Celgard 2500 after heating at 175ºC for 10 min.

### Examples

### Example 1. Polymer blend porous membranes prepared with PES and UHMW PEO.

A polymer blend PES/UHMW PEO (wherein UHMW means ultra-high molecular weight as defined in the description) porous membrane is prepared as follows:
- Step 1a. PES is dissolved in DMF/NMP at a 20 wt%, stirring for 24 h at room temperature (RT)
- Step 1b. PEO is added in powdery form at a different PEO/PES wt % ratio. After PEO is added, the T is raised to 120ºC while constantly stirring for 20 min
- Step 2. The dissolution of both polymers is spread on a glass support to obtain ≈ 40 µm porous membranes after coagulation.
- Step 3. The spread dissolution is immersed in ethanol, for example at 25 ºC for 30 min.

**Table 1** collects different PES membranes prepared varying the polymer ratio and the PEO molecular weight (MW). In the first set, DMF is used as solvent and PEO MW is varied from 1×10⁵ to 8×10⁶ g/mol. In this set, the PES:PEO ratio is always 75:25, and samples are named as PES-PEOn, where n is the PEO MW × 10⁻⁵. In the second set, NMP is used as solvent and the polymer ratio is varied from 75:25 to 95:5, keeping constant the PEO MW which is 8 × 10⁶ g/mol. In all cases the PES concentration in the dissolution (either DMF or NMP) is 20wt%, stirring time is 24 h and temperature 25 ºC. PEO is stirred with PES for 20 min at 120 ºC in all cases, and the coagulation step is done at 25ºC for 30 min. All of the membranes in **Table** 1 are tough and mechanically stable.

**Table 1. Nomenclature and composition of PES:PEO membranes.**

| **Membrane** | **PEO MW g/mol** | **PES:PEO wt ratio** |
|---|---|---|
| **Solvent DMF** | | |
| PES-PEO1 | 1 × 10⁵ | 75/25 |
| PES-PEO9 | 9 × 10⁵ | 75/25 |
| PES-PEO20 | 2 × 10⁶ | 75/25 |
| PES-PEO80 | 8 × 10⁶ | 75/25 |

| **Solvent NMP** | | |
|---|---|---|
| PES75 | 8 × 10⁶ | 75/25 |
| PES80 | 8 × 10⁶ | 80/20 |
| PES85 | 8 × 10⁶ | 85/15 |
| PES90 | 8 × 10⁶ | 90/10 |
| PES95 | 8 × 10⁶ | 95/5 |

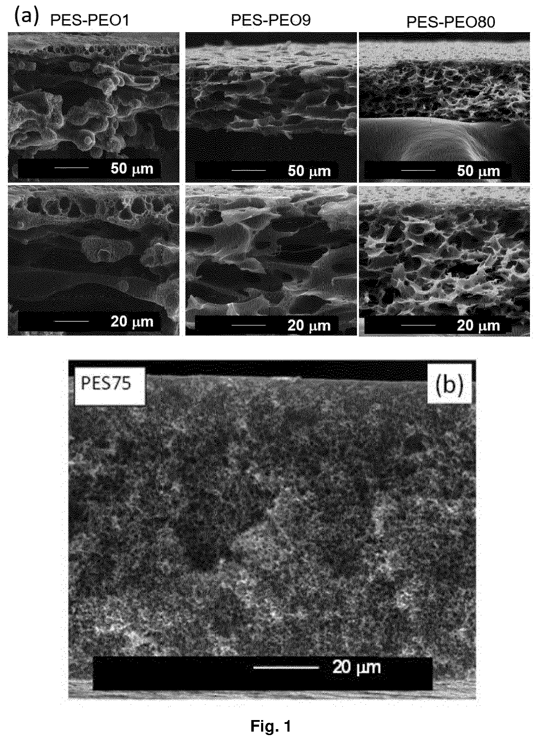

In **Figure 1a** the effect of PEO MW on pore morphology is well seen: the membrane pores become smaller as the PEO MW becomes larger. This is a consequence of the higher viscosity of the dissolutions when employing higher MW PEO. In **Figure 1b****,** the effect of changing solvent is illustrated with SEM images of PES75: when using NMP the pore size decreases.

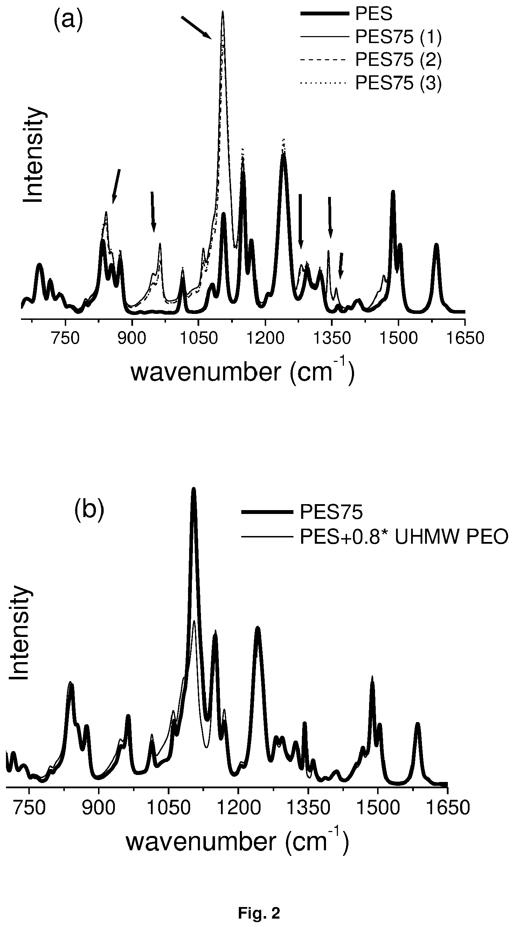

ATR-FTIR have been done on different regions of the PES75 membrane in **Table 1.** In **Figure 2a** three spectra appear showing excellent reproducibility of the polymer composition throughout the membrane. The spectrum of pure PES appears as a thick solid line, and black arrows mark the PEO FTIR bands in the membrane spectra. **Figure 2b** compares the PES75 spectrum to a spectrum resulting from the addition of the pure PES and pure PEO spectra. The addition spectrum has been done at a PES:PEO ratio of 1:0.8, which is their approximate molar composition. The addition and experimental spectra differ clearly in that bands of PEO are more intense than those of PES. This is especially well seen on the PEO bands at 1100 cm⁻¹. This is an indication that closer to the surface (it is an ATR-FTIR spectrum) the ratio of PEO is over the nominal one, i.e., PEO tends to be at the membrane surface and the pore surface. For the rest, the spectrum is well described as the addition of the two polymers, i.e. no specific interactions between both are seen. As a matter of fact, the PEO spectrum in the blend is very similar to that of a bulk semicrystalline PEO.

### Membrane porosity

The porosity of the PES75 membrane as estimated by weighing geometrically well-defined membranes is around 50% in all cases, typical values of this type of membranes.

### Membrane wettability, liquid infiltration, liquid uptake and dimensional stability

Because of the presence of PEO, the wettability of these membranes with water and ionic liquids, including electrolytes, is excellent. Together with water, different liquids consisting of Al, Li or Zn salts dissolved in hydrophobic and hydrophilic liquids have been successfully infiltrated by mere soaking of the membrane in the liquid for several hours. Deep eutectic solvent electrolytes have also been infiltrated, for example the eutectic mixture ZnCl₂ dissolved in ethylene glycol at a molar ratio 1:4 (EGZn hereafter).

The liquid uptake after infiltration is measured as follows: dry PES75 membranes of 2 cm diameter are weight and then soaked with water and EGZn for 24 hours. Then they are left to drip for 10 minutes, gently dried with filter paper and stored for 24 h. Subsequently their weight is measured again. The water uptake is about 250% and that of EGZn is 850%. The high liquid uptake suggests strongly that the liquid is i) forming a gel with PEO at the pores and ii) covering the surface of the membrane in the form of a gel with PEO.

In the case of the membranes soaked in the liquid electrolyte EGZn it has been checked the membrane shows no apparent swelling or mechanical softening, and the dimensions and mechanical stability are preserved after one year soaking.

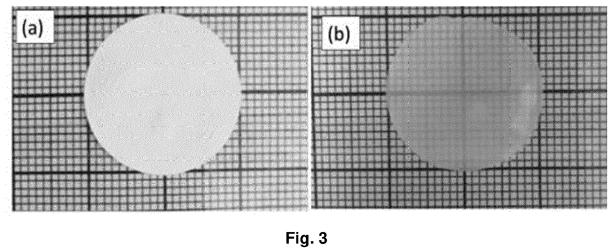

The dimensional stability is checked by measuring the diameter of different membranes of 2 cm diameter after one year soaking in EGZn. An example of PES75 membrane before and after one year soaking appears in **Figure 3****,** on top of a graph paper to show their dimensions. The infiltrated membrane in **Figure 3b** is translucent because of the pore filling with the liquid EGZn.

It has to be noted that infiltration of these liquids, water or hydrophilic ionic liquids or electrolytes, is not possible in a pure PES porous membrane because of its hydrophobicity.

### Heat shrinkage

Thin porous polymer membranes can be deformed at relatively low temperatures, since the glass transition or melting temperature of many polymers is not far from 100ºC. Heat shrinkage is particularly dangerous when polymer porous membranes are used as battery separators. PES has glass transition temperature between 180ºC and 250ºC, and membranes produced by NIPS do not, a priori, have quenched mechanical deformations, and thus PES membranes are not expected to suffer dimensional alterations at temperatures about 100ºC.

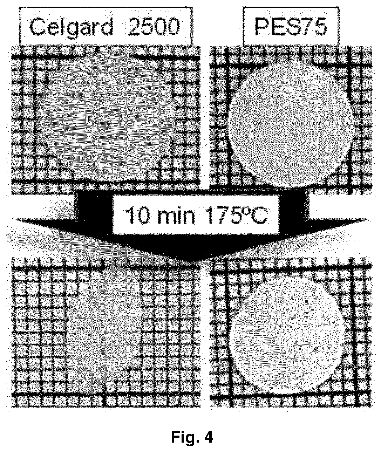

**Figure 4** compares heat shrinkage of a well-known polyolefin battery separator, Celgard, with PES75 after being heated for 10 minutes at 175ºC. Though certain shrinkage can be observed (≈10%) in PES75, it is small compared to that suffered by Celgard.

### Example 2: Polymer blend porous membranes prepared with PC and UHMW PEO.

PC is not conventionally used as a battery separator. However, PC has excellent inertia against acids which is very useful in certain emerging post-Li batteries, where acid electrolytes exist. Therefore, it has been chosen PC as SP in this example. A mixed bisphenol-A PC/UHMW PEO porous membrane is prepared as follows:
- Step 1a. PC is dissolved in NMP at a 20 wt%, stirring for 24 h at RT
- Step 1b. PEO UHMW is added in powdery form at wt % ratios PEO:PC 5/95, 7.5/92.5, 10/90, 15/85, 20/80. After PEO is added, the T is raised to 120ºC while constantly stirring for 20, 40, 90, or 120 min. **Table 2** collects the different membranes prepared.
- Step 2. The dissolution of both polymers is spread.
- Step 3. The spread dissolution is immersed in ethanol at 25ºC for 30 or 60 min. The crystallization of PEO in ethanol is forced by immersing in an ethanol bath at 25ºC. This step fosters the PEO segregation to the pore walls. The conditions of this step have not been changed to allow comparison of the effect of experimental conditions of step 1b on the morphology and polymer distribution in membranes.

Finally, porous membranes of about ≈ 40 µm are obtained.

**Table 2** collects a set of membranes prepared under different experimental conditions and their physicochemical characterization.

**Table 2. Nomenclature, formulation, and stirring time of PC:PEO membranes prepared in NMP with PEO 8×10⁶ g/mol. Crystallinity (χc) of both polymers by DSC. PEO is always UHMW.**

| **Membrane** | **PC wt. %** | **t (min) at 120ºC** | **χc (wt. %)** | |
|---|---|---|---|---|
| | | | **PC** | **PEO** |
| PC100 | 100 | - | 0 | 0 |
| PC9520 | 95 | 20 | 6.3 | 39.6 |
| PC9540 | 95 | 40 | 13.4 | 45.7 |
| PC9240 | 92.5 | 40 | 13.5 | 50.8 |
| PC9020 | 90 | 20 | 4.8 | 37.1 |
| PC9040 | 90 | 40 | 11.9 | 57.4 |
| PC9090 | 90 | 90 | 17.6 | 55.8 |
| PC8540 | 85 | 40 | 6.7 | 47.4 |
| PC8590 | 85 | 90 | 10.3 | 51.6 |
| PC80120 | 80 | 120 | 4.0 | 18.3 |

In compatible polymers such as PC:PEO the stirring time of the polymer blend dissolution (Step 1b) is critical to attain a certain membrane morphology and polymer distribution. The PC:PEO blend is different from the PES:PEO in that PC crystallizes in the presence of PEO and does not crystallize on its own. Thus, the pure PC membrane is amorphous, and in the PC:PEO membranes PC crystallizes to a different extent depending on the degree of mixing of both polymers. The PC crystallization can be followed by DSC (collected in **Table 2).**

All the membranes in **Table 2** can be handled without breaking and can be considered tough, in that they do not break upon handling them or cutting them into small pieces with scissors or dies.

### Comparison with lower molecular weight PEO

For the same polymer concentration, viscosity is much lower in dissolutions with PEO 1×10⁵ g/mol than in those with 8×10⁶ g/mol, and polymer mixing is quicker in the former than in the latter. **Table 3** shows some characteristics of membranes prepared with PEO 1×10⁵ g/mol at different stirring times. All membranes in **Table 3** are fragile in that they do break upon handling them or cutting them into small pieces with scissors or dies, and PCP1-120 does not form a continuous membrane (extremely fragile). In PCP1-120 the crystallinity of PC reaches 34 wt%, which is very high. This occurs because the low MW PEO is better mixed in a much shorter time than the high MW PEO, and also because the distribution of PC crystallinity is more homogeneous the lower the PEO MW.

**Table 3. Nomenclature and preparation of PC:PEO 90:10 membranes in NMP with PEO 1 ×10⁶ g/mol. Experimental conditions and crystallinity (χc) of both polymers by DSC.**

| **Membrane** | **t (min) at 120ºC** | **Xc (wt%)** | | **Brittleness** |
|---|---|---|---|---|
| | | **PC** | **PEO** | |
| PCP1-5 | 5 | 6.6 | 22.3 | + |
| PCP1-10 | 10 | 11.7 | 29.4 | ++ |
| PCP1-120 | 120 | 34.0 | 10.2 | ++++ |

**Table 2** shows that the χ_{c} of PEO 8×10⁶ g/mol increases steeply as the PC χ_{c} does so until it reaches a value of about 55 wt%, which is very close to the χ_{c} of bulk PEO. This is an indication that PEO crystallizes freely in those membranes. **Table 3** shows that, on the opposite, in the membranes prepared with PEO 1×10⁵ g/mol, the PEO χ_{c} never surpasses 30 wt%, and in PCP1120, where PC χ_{c} is 34 wt%, PEO χ_{c} is roughly a 10 wt%. This is an indication that in the PCP1 membranes, the crystallization of PEO is hindered, and more so the longer the stirring time, i.e., the better the polymer mixing. It is to be taken into account that under the same crystallization conditions, PEO 1×10⁵ g/mol would crystallize more than the UHMW ones. The fact that in these membranes the χ_{c} of PEO 8×10⁶ g/mol is close to that of bulk PEO, and that the χ_{c} PEO 1×10⁵ g/mol is about half that of a bulk PEO suggests that the segregation of PEO to the pore surface is high in the UHMW PEO and low in the shorter chain PEO.

The shorter chain PEO is not segregated to the pore surface in the same way as UHMW PEO and will be less efficient as gel-former not only because of its lower chain length but also because of its lower availability. Besides, and as a consequence of the different distribution of PC crystalline domains, membranes with lower chain length PEO are fragile and cannot be used as a porous membrane for infiltration, whereas with UHMW PEO tough mixed membranes can be obtained.

### Membrane porosity

Porosity has been determined by weighing geometrically well-defined specimens of membranes PC90-40, PC85-90 and PC80-120 and it is around 50% in all cases, a typical value of this type of membranes.

### Membrane wettability, liquid infiltration, liquid uptake and dimensional stability

Liquid uptake has been studied in a selection of membranes from **Table 2** with the same methodology of the membranes in example 1. PC90-40 and PC85-90 have been soaked in water for 24 hours, and PC80-120 has been soaked in the liquid electrolyte EGZn for 24 hours. After being soaked in water or EGZn, the membranes become translucent, because of extensive pore filling. The pure PC membrane cannot be infiltrated with water because of its hydrophobicity.

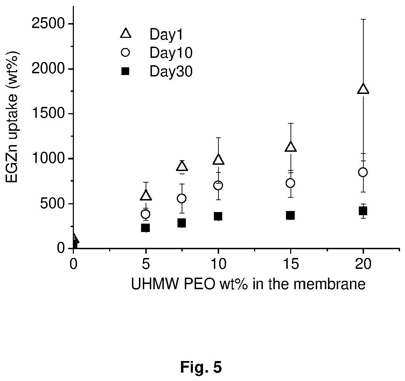

**Figure** 5 shows the initial uptake of EGZn, and its time evolution over 30 days as a function of PEO wt.% in the membrane. The initial liquid uptake depends very much on the ratio PC:PEO, being higher as the concentration of PEO increases. However, retention, (uptake after 30 days) is roughly the same for the PC9040, PC8540, and PC80120 (360%-420%).

### Heat shrinkage

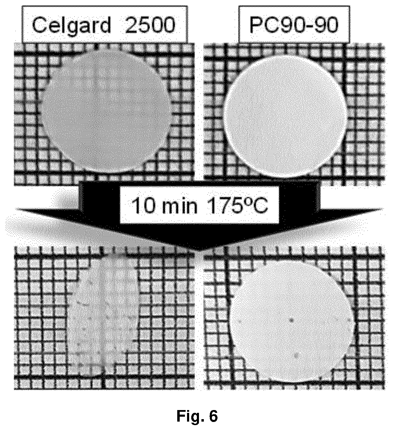

PC has glass transition temperature of about 150ºC, and since membranes produced by NIPS do not a priori have quenched mechanical deformations, PC membranes are not expected to suffer dimensional alterations at temperatures about 100ºC. **Figure 6** compares heat shrinkage of a well-known polyolefin battery separator, Celgard, with membrane PC9090 after being heated for 10 minutes at 175ºC. While Celgard loses its geometry and dimensions completely, the PC9090 membrane is unaltered.

### Acid resistance

The PC/PEO membrane is able to endure acidic media much better than other polymers. The mechanical integrity of the PC:PEO membranes in Table 2 was compared to that of polyolefin common battery separators after soaking in chloroaluminates such as urea:AlCl₃ and acetamidine-AlCl₃. It was seen that polyolefin-based separators are unable to endure chloroaluminates, disintegrating shortly after contact, while the PC:PEO based membranes seemed unaltered after several days.

### Summary of the two membrane examples

1. It is possible to prepare membranes with UHMW PEO and either PES or PC. PES is very poorly compatible with PEO while PC is fairly compatible.
2. In both cases the membranes are able to absorb different liquid electrolytes and retain them for several months without deterioration of their mechanical properties and with remarkable liquid retention.
3. The blend with the fairly compatible PC produces membranes with a porous morphology very different from pure PC. Very strict control of the experimental conditions is needed to produce tough and useful membranes.
4. The blend with the poorly compatible PES produces membranes with a porous morphology similar to pure PES. The incorporation of PEO does not change strongly their mechanical properties.
5. PES and PC are excellent structural polymers for membrane formation, being thermally stable, showing less heat shrinkage than conventional polyolefin-based battery separators, resistant to alkalis (PES) and to acids (PC).

## Claims

1. An infiltrated porous polymer blend membrane, which comprises:
- a polymer gel which is formed by an infiltrated liquid and a first polymer which is soluble in the infiltrated liquid, and which is of a molecular weight from 5×10⁵ to 8×10⁶ g/mol; and
- a second polymer which is a structural polymer, which is insoluble in the infiltrated liquid, and which is non swellable in the infiltrated liquid.

2. The membrane according to claim 1, wherein the first polymer is selected from polyethylene oxide) and poly(vinyl pyrrolidone).

3. The membrane according to claim 2, wherein, and preferably wherein the first polymer is polyethylene oxide).

4. The membrane according to any of claims 1 to 3, wherein the first polymer is of a molecular weight of preferably of a molecular weight from 1×10⁶ to 8×10⁶ g/mol.

5. The membrane according to any of claims 1 to 4, wherein the first polymer is located at the pore walls and the membrane surface.

6. The membrane according to any of claims 1 to 5, wherein the second polymer is selected from polyether sulfone (PES) or polybisphenol A carbonate (PC) or polylactic acid (PLA).

7. The membrane according to any of claims 1 to 6, which further comprises micro inorganic fillers, nanometric inorganic fillers, micro-organic fillers or nanometric organic fillers.

8. The membrane according to any of claims 1 to 7, wherein the wt. % ratio of the first polymer/the second polymer is from 1/99 to 40/60.

9. The membrane according to any of 1 to 8, wherein:
the first polymer is PEO;
the second polymer is PC; and
the wt. % ratio of PEO/PC is from 5/95 to 20/80.

10. The membrane according to any of 1 to 8, wherein:
the first polymer is PEO;
the second polymer is PES; and
the wt. % ratio of PEO/PES is from 5/95 to 30/70.

11. The membrane according to any of claims 1 to 10, wherein the thickness of the membrane is from 5 µm to 500 µm.

12. A process to obtain the membrane according to any of claims 1 to 11, which comprises the steps of:
i) dissolution of the second polymer in one or more solvents, stirring at a temperature from 20 ºC to 70 ºC, during a time from 1 h to 24 h;
ii) dissolution of the first polymer in the dissolution of the second polymer obtained in step (i), stirring at a temperature from 25 ºC to 140 ºC, during a time from 5 minutes to 120 minutes,
iii) spreading of the dissolution obtained in step (ii) on a surface by bar-coating to obtain a coated blend dissolution;
iv) immersion of the coated blend dissolution of step (iii) in a non-solvent of the first polymer and the second polymer to induce the phase separation and obtain the porous polymer blend membrane; and
v) infiltration of the infiltrated liquid to obtain *in situ* the polymer gel.

13. The use of the membrane according to any of claims 1 to 11, as a component of sensors, actuators, molecular transporters, biomedical devices, capacitors, and batteries.
